# EUROPÄISCHE PATENTSCHRIFT

(11) **EP 1 718 707 B1**
(45) Veröffentlichungstag und Bekanntmachung des Hinweises auf die Patenterteilung: **28.11.2007**
(21) Anmeldenummer: 05707199.5
(22) Anmeldetag: 04.02.2005
(51) Int. Cl.: C09D 7/00, C08K 5/00

(54) **SOL-GEL-BESCHICHTUNGEN AUS WASSERLÖSLICHEN OXALAMIDEN**
SOL-GEL-COATINGS MADE OF WATER-SOLUBLE OXALAMIDES
REVETEMENTS-SOL-GEL COMPORTANT DES OXAMIDES SOLUBLES DANS L'EAU

(30) Priorität: 19.02.2004 DE 102004008056
(43) Veröffentlichungstag der Anmeldung: 08.11.2006
(73) Patentinhaber: Bayer MaterialScience AG, 51368 Leverkusen (DE)
(72) Erfinder: KÖHLER, Burkhard, 51373 Leverkusen (DE); KRAUS, Harald, 51371 Leverkusen (DE); SIMON, Joachim, 40589 Düsseldorf (DE)
(86) Internationale Anmeldenummer: PCT/EP2005/001133
(87) Internationale Veröffentlichungsnummer: WO 2005/090493

(56) Entgegenhaltungen:
- EP-A- 0 528 602
- US-A- 6 020 448

## Beschreibung

Die Erfindung betrifft Beschichtungen auf Sol-Gel-Basis aus silanfunktionellen Oxalamiden, die über Alkoxyalkylreste hydrophiliert sind.

Sol-Gel-Kondensate werden häufig für Beschichtungen eingesetzt. Die Herstellung erfolgt durch Mischen geeigneter niedermolekularer Verbindungen mit vernetzungsfähigen Gruppen in einem Lösungsmittel, wonach durch Zugabe von Wasser und gegebenenfalls Katalysatoren die Hydrolyse- und/oder Kondensationsreaktion eingeleitet wird. Die Durchführung solcher Sol-Gel-Prozesse ist dem Fachmann grundsätzlich bekannt und beispielsweise in Journal of Non-Crystalline Solids 48 (1982) 11-16 beschrieben. Ein Nachteil der Systeme des Standes der Technik ist allerdings, dass im allgemeinen der Zusatz organischer Lösungsmittel notwendig ist, da die eingesetzten niedermolekularen Verbindungen nicht oder nicht vollständig mit Wasser mischbar sind. Aber gerade die Verwendung organischer Lösemittel ist für viele Anwendungen häufig unerwünscht.

Es bestand daher die Aufgabe, wasserlösliche Verbindungen aufzufinden, die durch Hydrolyse und Kondensation zu vernetzten Sol-Gel-Materialien abreagieren und zur Beschichtung von Substraten verwendet werden können.

Oxalsäureamide der allgemeinen Formel (I)

(R1O)₃₋ₙ R2ₙ Si-CH₂-CH₂-CH₂-NH-CO-CO-HN-CH₂-CH₂-CH₂-Si (OR1)₃₋ₙ R2ₙ (I)

sind grundsätzlich bekannt. Sie werden in EP-A 729 963 und CA-A 2 087 227 als Kunststoffadditive und Antioxidanzien beschrieben, wobei jedoch keinerlei Hinweise auf ihre Verwendbarkeit zur Herstellung von wasserbasierten Sol-Gel-Beschichtungen zu entnehmen sind.

Es wurde nun gefunden, dass geeignet substituierte Oxalsäureamide nicht nur in Wasser löslich sind, sondern auch zur Herstellung von wasserbasierten Sol-Gel-Beschichtungen mit ausgezeichneten Eigenschaften geeignet sind.

Gegenstand der Erfindung ist daher die Verwendung von alkoxysilylgruppenhaltigen Oxalsäureamiden als Vernetzer bei der Herstellung von Sol-Gel-Beschichtungen.

Ein weiterer Gegenstand der Erfindung sind Beschichtungsmittel zur Herstellung von Sol-Gel-Beschichtungen mindestens enthaltend
A) ein oder mehrere alkoxysilylgruppenhaltige Oxalsäureamide der allgemeinen Formel (II), 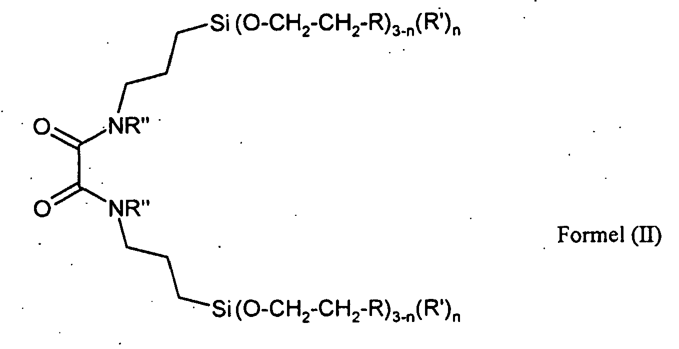 wobei
   - R": Wasserstoff oder ein organischer C₁-C₁₀ Rest,
   - R': organische gegebenenfalls sauerstoffgebundene C₁-C₁₀ Reste,
   - R: ein sauerstoffgebundener gegebenenfalls ein oder mehrere Ethergruppen aufweisender Rest mit 1 bis 30 C-Atomen und
   - n: eine ganze Zahl zwischen 0 und 2 ist,
B) gegebenenfalls weitere Vernetzer
C) einen oder mehrere Katalysatoren und
D) Wasser.

Die Oxalamide der Formel (II) können symmetrisch oder auch unsymmetrisch aufgebaut sein. Bei symmetrischen Oxalsäureamiden sind beide Si-haltigen amidisch gebundenen Gruppen gleich aufgebaut, während bei unsymmtrischen Oxalsäureamiden wenigstens einer der Reste R, R', R" oder die Zahl n der amidisch gebundenen Gruppen verschieden sind. Bevorzugt sind die Oxalsäureamide symmetrisch aufgebaut.

Bevorzugte Oxalsäureamide sind solche der vorstehend genannten Art gemäß Formel (II), wobei
- R": Methyl oder Wasserstoff,
- R': gegebenenfalls sauerstoffgebundene Methyl-, Ethyl- oder Propylgruppen,
- R: ein Alkoxyalkylrest mit 1 bis 3 Kohlenstoffatomen und
- n: 0, 1 oder 2 ist.

Besonders bevorzugte Oxalsäureamide sind solche der vorstehend genannten Art gemäß Formel (II), wobei
- R": Wasserstoff,
- R': eine gegebenenfalls sauerstoffgebundene Methyl- oder Ethylgruppe,
- R: Methoxy und
- n: 0 oder 1 ist.

Die erfindungsgemäß einzusetzenden Oxalsäureamide werden üblicherweise durch Umsetzung von Oxalsäure oder deren Estern mit Aminopropylalkoxysilanen der Formel (III) erhalten 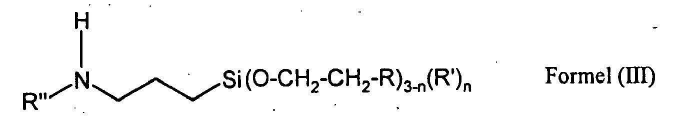 wobei R, R', R" und n die vorstehend definierten Bedeutungen haben.

Bevorzugt ist Verwendung von Oxalsäuredialkylestern, besonders bevorzugt von Oxalsäurediethylester als Oxalsäurequelle.

Die Umsetzung der beiden Reaktanden erfolgt gegebenenfalls unter Verwendung eines Lösemittels bei Temperaturen von bevorzugt 15 bis 150°C, besonders bevorzugt 20 bis 40°C.

Der bei der Reaktion freiwerdende Alkohol wird destillativ, vorzugsweise bei reduziertem Druck entfernt. Wird die Abdestillation des Spaltprodukt während der Amidbildung durchgeführt, kann das Ende der Reaktion daran erkannt werden, dass kein Spaltprodukt mehr überdestilliert. Diese Vorgehensweise hat des Weiteren den Vorteil, dass aufgrund der damit verbundenen Gleichgewichtsverschiebung der Umsatz beider Reaktanden quantitativ, d.h. >99 %, bevorzugt >99,5 %, ist.

Üblicherweise werden pro Mol Oxalsäure bzw. -ester zwei Mol des Aminopropylalkoxysilans der Formel (III) eingesetzt. Falls gewünscht kann man aber auch von diesen stöchiometrischen Mengen abweichen und mehr oder weniger Aminopropylalkoxysilan zugeben.

Nach der eigentlichen Amidbildung und Abdestillation des Spaltprodukts kann das Rohprodukt ohne weitere Reinigung weiterverarbeitet werden. Falls nötig kann es jedoch auch zuvor noch nach den üblichen Methoden wie Chromatographie oder Umkristallisation aufgereinigt werden.

Die Aminopropylalkoxysilane der Formel (III) lassen sich durch Umetherung aus Aminopropylalkoxysilanen der Formel (IV) 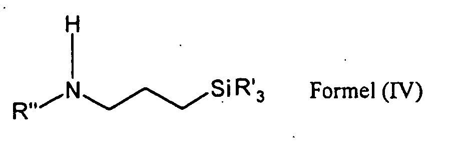 herstellen,
wobei R' und R" die vorstehend genannten Bedeutungen haben, die Reste R' gleich oder verschieden sind und wenigstens ein R' ein an Si sauerstoffgebundener Rest der vorstehend genannten Art ist.

Dazu werden die Verbindungen der Formel (IV) gegebenenfalls in einem gegenüber Alkoxygruppen inerten Lösungsmittel vorgelegt und die gewünschte Menge eines Alkohols der allgemeinen Formel (V) 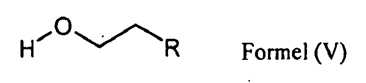 zugegeben wobei R die vorstehend festgelegte Bedeutung hat.

Die Reaktionstemperatur beträgt dabei typischerweise 70 bis 140°C, bevorzugt 80 bis 120°C.

Falls gewünscht können auch saure oder basische Katalysatoren wie p-Toluolsulfonsäure, Schwefelsäure, Phosphorsäure, KOH, NaOH, K₂CO₃ oder Na₂CO₃ zugesetzt werden. Falls gewünscht können diese pur in Substanz oder als Lösung in organischen und/oder wässrigen Lösungsmitteln eingesetzt werden.

Die Mengen an Katalysator betragen dabei 0,01 bis 3 Gew.-% bevorzugt 0,5 bis 2 Gew.-% bezogen auf die Aminopropylsilane der Formel (IV).

Basische Katalysatoren der vorstehend genannten Art sind bevorzugt.

Der dabei abgespaltene Alkohol wird destillativ bevorzugt unter vermindertem Druck abdestilliert.

Üblicherweise ist das molare Verhältnis von an Si sauerstoffgebundenen Resten der Aminopropylalkoxysilane zur Einsatzmenge des Alkohols der Formel (V) 1 : 1. Um jedoch einen quantitativen Austausch der Si gebundenen Alkoxygruppen gegen O-CH₂-CH₂-R möglichst schnell zu erreichen, ist es vorteilhaft, mit einem Überschuss an Alkohol der Formel (V) zu arbeiten. Falls gewünscht kann dieses Verhältnis jedoch auch unter 1:1 liegen, wobei dann nicht alle Alkoxygruppen gegen O-CH₂-CH₂-R ersetzt werden. Diese Vorgehensweise ist möglich aber nicht bevorzugt.

Als Aminopropylalkoxysilane der Formel (IV) werden bevorzugt Aminopropyltrialkoxysilane mit 1 bis 3 C-Atomen je Alkoxygruppe und Aminopropyldialkoxyalkylsilane mit 1 bis 3 C-Atomen je Alkoxy- bzw. Alkylgruppe eingesetzt.

Beispielsweise können als Verbindungen der Formel (IV) Aminopropyltrimethoxysilan, Aminopropyltriethoxysilan, Aminopropylmethyldimethoxysilan, Aminopropylmethyldiethoxysilan, Aminopropyldimethylmethoxysilan oder Aminopropyldimethylethoxysilan eingesetzt werden.

Als Alkohole der Formel (V) werden bevorzugt alkoxygruppenhaltige Alkohole mit 1 - 3 C-Atomen im Alkoxyrest eingesetzt. Besonders bevorzugt ist Methoxyethanol.

Nach der eigentlichen Umetherung und Abdestillation des Spaltprodukts wird das Rohprodukt bevorzugt mittels Vakuumdestillation aufgereinigt und so das Aminopropylalkoxysilan isoliert.

Als weitere Vernetzer in den erfindungsgemäßen Beschichtungsmitteln können in Komponente B) wasserlösliche oder wasseremulgierbare Alkoxysilane, wasserlösliche oder wasseremulgierbare organische Polymere und/oder wässrige oder alkoholische Dispersionen von SiO₂-Partikeln mit Durchmessern im Nanometerbereich ("Kieselsole") eingesetzt werden.

Beispiele für wasserlösliche oder wasseremulgierbare Alkoxysilane sind solche der Formel (VI)

Si(O-CH₂-CH₂-R)₄₋ₘ(R')ₘ Formel (VI)

wobei R und R' die bereits vorstehend genannten Bedeutungen haben und m eine ganze Zahl von 4 bis 0, bevorzugt 3 bis 0, besonders bevorzugt 1 oder 0 ist.

Ein besonders bevorzugtes wasserlösliches oder wasseremulgierbares Alkoxysilan ist Tetra(methoxyethoxy)silan.

Als wasserlösliche oder wasseremulgierbare organische Polymere können Carboxymethylcellulose, Hydroxyethylstärke, Polyvinylalkohol, Hydroxyethylcellulose, Hydroxypropylcellulose, Hydroxyethylmethylcellulose, Borat-modifizierter Schellack, Co- oder Homopolymerisate der Acrylsäure oder Methacrylsäure, Co- oder Homopolymerisate des Acrylamids oder Methacrylamids, Co- oder Homopolymerisate des N-Isopropylacrylamids, Co- oder Homopolymerisate des Dimethylacrylamids, Co- oder Homopolymerisate des Hydroxypropyl- oder Hydroxyethylacrylats oder -methacrylats, Co- oder Homopolymerisate der (Meth)acrylate von Polyethylenglykolmethylethern, Polyalkylenether aus den Oxiranen Ethylenoxid, Propylenoxid oder Glycidol oder Polyurethandispersionen eingesetzt werden.

Geeignete Kieselsole sind Siliciumdioxid-Dispersionen auf Basis von Kieselsol, Kieselgel, pyrogenen Kieselsäuren oder Fällungskieselsäuren oder Mischungen der genannten.

Kieselsäuresole sind kolloidale Lösungen von amorphem Siliciumdioxid in Wasser, die auch als Siliciumdioxidsole meist aber kurz als Kieselsole bezeichnet werden. Das Siliciumdioxid liegt dabei in Form von kugelförmigen und an der Oberfläche hydroxilierten Partikeln vor. Der Partikeldurchmesser der Kolloidteilchen beträgt in der Regel 1 bis 200 nm, wobei die zur Teilchengröße korrelierende spezifische BET-Oberfläche (bestimmt nach der Methode von G.N.Sears, Analytical Chemistry Vol. 28, N. 12, 1981-1983, Dezember 1956) bei 15 bis 2000 m²/g liegt. Die Oberfläche der SiO₂-Teilchen weist eine Ladung auf, die durch ein entsprechendes Gegenion ausgeglichen wird, das zur Stabilisierung der kolloidalen Lösung führt. Die alkalisch stabilisierten Kieselsole besitzen einen pH-Wert von 7 bis 11,5 und enthalten als Alkalisierungsmittel beispielsweise geringe Mengen Na₂O, K₂O, Li₂O, Ammoniak, organische Stickstoffbasen, Tetraalkylammoniumhydroxide oder Alkali- oder Ammoniumaluminate. Kieselsole können auch als semistabile kolloidale Lösungen schwach sauer vorliegen. Ferner ist es möglich, durch Beschichtung der Oberfläche mit Al₂(OH)₅Cl kationisch eingestellte Kieselsole herzustellen. Die Feststoff-Konzentrationen der Kieselsole liegen bei 5 bis 60 Gew.-% SiO₂.

Der Herstellprozess für Kieselsole durchläuft im wesentlichen die Produktionsschritte Entalkalisierung von Wasserglas mittels Ionenaustausch, Einstellung und Stabilisierung der jeweils gewünschten Teilchengrößen(verteilung) der SiO₂-Partikel, Einstellung der jeweils gewünschten SiO₂-Konzentration und gegebenenfalls einer Oberflächenmodifikation der SiO₂-Partikel, wie beispielsweise mit Al₂(OH)₅Cl. In keinem dieser Schritte verlassen die SiO₂-Partikel den kolloidal gelösten Zustand. Dadurch erklärt sich das Vorliegen der diskreten Primärpartikel mit beispielsweise hoher Bindereffektivität.

Geeignete Kieselsole auf Basis von Fällungskieselsäuren sind unter dem Namen Levasil® bei der Fa. H.C. Starck, Leverkusen, DE erhältlich.

Als Katalysatoren in Komponente C) können alle dem Fachmann an sich aus der Chemie der Sol-Gel-Materialien bekannten Verbindungen zur Beschleunigung der Hydrolyse und Kondensationsreaktion der Alkoxysilane genutzt werden. Bevorzugt sind hier organische Säure wie Sulfonsäuren zu nennen. Besonders bevorzugt ist p-Toluolsulfonsäure.

Die Komponente C) wird in Mengen von 0,05 bis 5 Gew.-%, vorzugsweise von 0,1 bis 1 Gew.-% bezogen auf den Festgehalt der Beschichtung zugesetzt.

Neben den Komponenten A) - D) können in den erfindungsgemäßen Beschichtungsmitteln auch die aus der Lackchemie an sich üblichen Hilfs- und Zusatzstoffe wie Verlaufshilfsmittel, Lichtschutzmittel wie HALS-Amine, UV-Absorber, Pigmente, Farbstoffe oder biozide Wirkstoffe enthalten sein.

Die erfindungsgemäßen Beschichtungsmittel eignen sich zur Herstellung widerstandsfähiger Beschichtungen beispielweise auf Holz, Keramik, Glas, Metallen, Kunststoffen oder auch sonstigen mineralischen Untergründen.

Die Applikation kann dabei nach allen gängigen Techniken wie Streichen, Sprühen, Rollen, Schleudern oder Tauchen erfolgen.

Nach Applikation wird die Beschichtung bei Temperaturen von bevorzugt 30°C bis 200°C ausgehärtet.

So können Beschichtungen hoher Kratzfestigkeit, Chemikalien- und Lösemittelbeständigkeit sowie abweisenden Eigenschaften (Anti-Graffiti, Fouling-Release) erhalten werden. Diese Beschichtungen sind ebenfalls Gegenstand dieser Erfindung.

### Beispiele

Das eingesetzte wässrige Kieselsol Levasil® 200S/30 wurde von H.C. Starck, Leverkusen, DE bezogen. Dabei handelt es sich um eine kationisch mit Aluminiumsalzen stabilisierte Dispersion von amorphen SiO₂-Nanopartikeln (30 Gew:-% SiO₂, mittlere Teilchengröße 15 nm, BET-Oberfläche 200 m²/g). Vor Verwendung wurde der pH-Wert von Levasil® 200S/30 durch Zugabe von konzentrierter Salzsäure von 3,8 auf 2 eingestellt.

Die Beschichtungen wurden mittels eines Filmziehrahmens (Rakel) auf Glas appliziert und bei Raumtemperatur bzw. im Umluftschrank gehärtet.

Die Wirksamkeit als Anti-Graffiti-Beschichtung wurde durch einstündiges Einwirken einer 1 gew.-%igen Fuchsinlösung in Wasser-Ethanol-Butylglycol (1:1:1) geprüft. Der trockene Film wurde mit einem Ethanol-getränkten Papiertuch abgewischt und verbleibender Farbstoff visuell klassifiziert. Keine erkennbaren Fuchsin-Reste wurden mit "restlos entfernt" angegeben.

Die Pendelhärte wurde nach König (DIN 53157) bestimmt.

### Beispiel 1

### Herstellung von Aminopropyl(trismethoxyethoxy)silan

Eine Mischung aus 800 g Aminopropyltrimethoxysilan, 2000 g Methoxyethanol und 8 g KOH-Pulver wurde für 16h auf 100°C erhitzt, wobei über eine Vigreux-Kolonne Methanol abdestilliert wurde. Dann wurde das überschüssige Methoxyethanol destillativ entfernt und anschließend das Produkt bei 165°C und 1,5 mbar überdestilliert. Es wurden 1010g Aminopropyl(trismethoxyethoxy)silan erhalten.

### Beispiel 2

### Herstellung von Aminopropyl(methyl)(bismethoxyethoxy)silan

Eine Mischung aus 100g Aminopropyl(methyl)diethoxysilan, 200g Methoxyethanol und 1g KOH-Pulver wurden für 16h auf 110°C erhitzt, wobei über eine Vigreux-Kolonne das abgespaltene Ethanol abdestilliert wurde. Dann wurde das überschüssige Methoxyethanol destillativ entfernt und anschließend das Produkt bei 118°C und 0,17 mbar überdestilliert. Es wurden 97 g Aminopropyl(methyl)(bismethoxyethoxy)silan erhalten.

### Beispiel 3

### Herstellung eines symmetrischen Oxalsäureamids der Formel (II) mit R = Methoxy und n = 0

Eine Mischung aus 1 mol Aminopropyl(trismethoxyethoxy)silan und 0,5 mol Oxalsäurediethylester wurde für 1 Woche bei Raumtemperatur gerührt. Dann wurde das gebildete Ethanol im Vakuum abgezogen. Das gewünschte Amid, dessen Struktur mittels 1H-NMR-Spektroskopie gesichert wurde, wurde dabei in quantitativer Ausbeute erhalten.

### Beispiel 4

### Herstellung eines symmetrischen Oxalsäureamids der Formel (II) mit R = Methoxy, R' = Methyl und n = 1

Eine Mischung aus 1 mol Aminopropyl(methyl)(bismethoxyethoxy)silan und 0,5 mol Oxalsäurediethylester wurde 1 Woche bei Raumtemperatur gerührt. Dann wurde das gebildete Ethanol im Vakuum abgezogen. Das gewünschte Amid, dessen Struktur mittels 1H-NMR-Spektroskopie gesichert wurde, wurde dabei in quantitativer Ausbeute erhalten.

### Beispiel 5

8 g Levasil® 200S/30 (mit konz. HCl auf pH=2 eingestellt) wurden mit 8 g H₂O verdünnt, dann wurden 12 g der Verbindung der Formel (II) aus Beispiel 3 (mit R = Methoxy und n = 0) und 0,12 g Verlaufshilfsmittel BYK® 306 (Byk Chemie, Wesel, DE) zugegeben, kurz gerührt und anschließend im geschlossenen Gefäß bei Raumtemperatur stehen gelassen. Nach 3 Stunden wurde eine Glasplatte mit eine Naßfilmdicke von 120 µm beschichtet und bei Raumtemperatur getrocknet. Man erhielt einen klaren, glatten Film.

Nach 24 h Lagerung bei Raumtemperatur wurde der Test mit der Fuchsin-Lösung durchgeführt. Der Farbstoff konnte restlos beseitigt werden.

### Beispiel 6

8 g Levasil® 200S/30 (mit konz. HCl auf pH=2 eingestellt) wurden mit 8 g H₂O verdünnt, dann wurden 12 g der Verbindung der Formel (II) aus Beispiel 3 (mit R = Methoxy und n = 0) und 0,12 g Verlaufshilfsmittel BYK 306 (Byk Chemie, Wesel, DE) zugegeben, kurz gerührt und anschließend im geschlossenen Gefäß bei Raumtemperatur stehen gelassen. Nach 3 Stunden wurden drei Glasplatten mit Naßfilmdicken von 120 µm beschichtet und wie folgt getrocknet:
a) 1 h 60°C
b) 1 h 100°C
c) 1 h 130°C

Von den ausgehärteten Beschichtungen wurden folgende Pendelhärten (nach König) bestimmt:
a) 148 sec
b) 179 sec
c) 192 sec

### Beispiel 7

3,5 g der Verbindung der Formel (II) aus Beispiel 3 (mit R = Methoxy und n = 0) wurden in 2 g H₂O gelöst und unter Rühren mit 6,78 g Tetramethoxyethoxysilan und danach mit 2 g 0,1 n p-Toluolsulfonsäure (in Wasser) versetzt, kurz gerührt und anschließend im geschlossenen Gefäß bei Raumtemperatur stehen gelassen. Nach 1,5 Stunden wurde eine Glasplatte mit einer Naßfilmdicke von 120 µm beschichtet und über Nacht bei Raumtemperatur getrocknet. Die Trockenfilmdicke betrug ca. 12 µm, es wurde eine Pendelhärte von 245 sec gemessen und nach dem Test mit der Fuchsin-Lösung konnte der Farbstoff restlos beseitigt werden.

## Patentansprüche

1. Verwendung von alkoxysilylgruppenhaltigen Oxalsäureamiden als Vernetzer bei der Herstellung von Sol-Gel-Beschichtungen.

2. Beschichtungsmittel zur Herstellung von Sol-Gel-Beschichtungen mindestens enthaltend
A) ein oder mehrere alkoxysilylgruppenhaltige Oxalsäureamide der allgemeinen Formel (II), 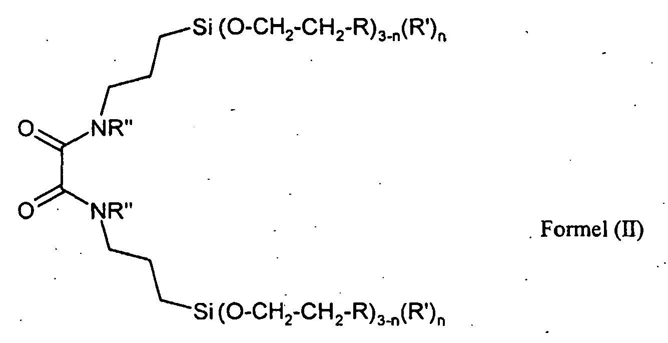 wobei
R" Wasserstoff oder ein organischer C₁-C₁₀ Rest,
R' organische gegebenenfalls sauerstoffgebundene C₁-C₁₀ Reste,
R ein sauerstoffgebundener gegebenenfalls ein oder mehrere Ethergruppen aufweisender Rest mit 1 bis 30 C-Atomen und
n eine ganze Zahl zwischen 0 und 2 ist,
B) gegebenenfalls weitere Vernetzer,
C) einen oder mehrere Katalysatoren und
D) Wasser.

3. Beschichtungsmittel zur Herstellung von Sol-Gel-Beschichtungen gemäß Anspruch 2, **dadurch gekennzeichnet, dass** die Oxalsäureamide der Komponente A) der genannten Formel (II) entsprechen, wobei
R" Wasserstoff,
R' eine gegebenenfalls sauerstoffgebundene Methyl- oder Ethylgruppe,
R Methoxy und
n 0 oder 1 ist.

4. Beschichtungsmittel zur Herstellung von Sol-Gel-Beschichtungen gemäß Anspruch 2 oder 3, **dadurch gekennzeichnet, dass** als weitere Vernetzer in Komponente B) wasserlösliche oder wasseremulgierbare Alkoxysilane, wasserlösliche oder wasseremulgierbare organische Polymere und/oder wässrige oder alkoholische Kieselsole eingesetzt werden.

5. Beschichtungsmittel zur Herstellung von Sol-Gel-Beschichtungen gemäß einem der Ansprüche 2 bis 4, **dadurch gekennzeichnet, dass** als Katalysator in Komponente C) p-Toluolsulfonsäure verwendet wird.

6. Sol-Gel-Beschichtungen erhältlich aus alkoxysilylgruppenhaltigen Oxalsäureamiden.

7. Sol-Gel-Beschichtungen erhältlich aus Beschichtungsmitteln gemäß einem der Ansprüche 2 - 5.

8. Substrate beschichtet mit Sol-Gel-Beschichtungen gemäß Anspruch 6 oder 7.

## Claims

1. Use of alkoxysilyl-containing oxalamides as crosslinkers in producing sol-gel coatings.

2. Coating compositions for producing sol-gel coatings, at least comprising
A) one or more alkoxysilyl-containing oxalamides of the general formula (II), 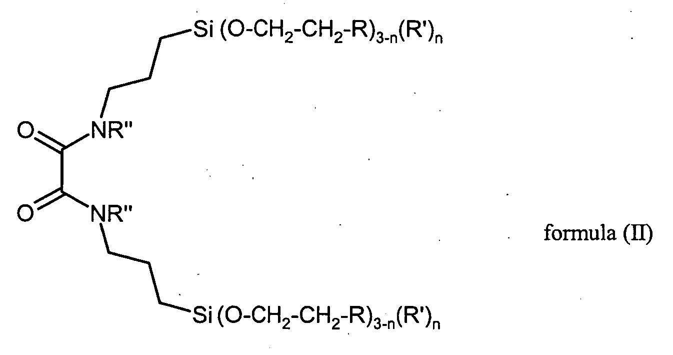 where
R" is hydrogen or an organic C₁-C₁₀ radical,
R' radicals are organic, optionally oxygen-attached C₁-C₁₀ radicals,
R is an oxygen-attached radical optionally containing one or more ether groups and having 1 to 30 carbon atoms and
n is an integer between 0 and 2,
B) optionally further crosslinkers,
C) one or more catalysts and
D) water.

3. Coating compositions for producing sol-gel coatings according to Claim 2, **characterized in that** the oxalamides of component A) are of the stated formula (II) where
R" is hydrogen,
R' is an optionally oxygen-attached methyl or ethyl group,
R is methoxy and
n is 0 or 1.

4. Coating compositions for producing sol-gel coatings according to Claim 2 or 3, **characterized in that** as further crosslinkers in component B) use is made of water-soluble or water-emulsifiable alkoxysilanes, water-soluble or water-emulsifiable organic polymers and/or aqueous or alcoholic silica sols.

5. Coating compositions for producing sol-gel coatings according to one of Claim 2 or 4, **characterized in that** as catalyst in compound C) use is made of p-toluenesulphonic acid.

6. Sol-gel coatings obtainable from alkoxysilyl-containing oxalamides.

7. Sol-gel coating obtainable from coating compositions according to one of Claims 2-5.

8. Substrates coated with sol-gel coatings according to Claim 6 or 7.

## Revendications

1. Utilisation d'amides de l'acide oxalique contenant des groupes alcoxysilyle comme réticulant lors de la production de revêtements sol-gel.

2. Agent de revêtement pour la production de revêtements sol-gel contenant au moins
A) un ou plusieurs amides de l'acide oxalique contenant des groupes alcoxysilyle de formule générale (II) 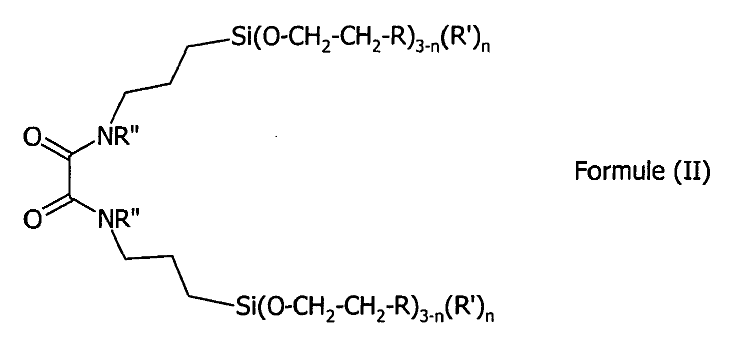 où
R" représente l'hydrogène ou un groupement C₁-C₁₀ organique,
R' représente des groupements C₁-C₁₀ organiques éventuellement liés à l'oxygène,
R représente un groupement ayant 1 à 10 atomes C comportant éventuellement un ou plusieurs groupes éther, lié à l'oxygène et
n représente un nombre entier entre 0 et 2,
B) éventuellement d'autres réticulants,
C) un ou plusieurs catalyseurs et
D) de l'eau.

3. Agent de revêtement pour la production de revêtements sol-gel selon la revendication 2, **caractérisé en ce que** les amides de l'acide oxalique du composant A) correspondent à la formule (II) citée, où
R" est l'hydrogène,
R' est un groupe méthyle ou éthyle éventuellement relié à l'oxygène,
R est méthoxy et
n est 0 ou 1.

4. Agent de revêtement pour la production de revêtements sol-gel selon la revendication 2 ou 3, **caractérisé en ce que** des alcoxysilanes solubles dans l'eau ou émulsifiables dans l'eau, des polymères organiques solubles dans l'eau ou émulsifiables dans l'eau et/ou des sols de silice aqueux ou alcooliques sont utilisés dans le composant B) comme réticulants supplémentaires.

5. Agent de revêtement pour la production de revêtements sol-gel selon l'une des revendications 2 à 4, **caractérisé en ce que** l'acide p-toluènesulfonique est utilisé comme catalyseur dans le composant C).

6. Revêtements sol-gel pouvant être obtenus à partir d'amides de l'acide oxalique contenant des groupes alcoxysilyle.

7. Revêtements sol-gel pouvant être obtenus à partir d'agents de revêtement selon l'une des revendications 2-5.

8. Substrats revêtus avec des revêtements sol-gel selon la revendication 6 ou 7.
